# EUROPEAN PATENT SPECIFICATION

(11) **EP 1 145 822 B1**
(45) Date of publication and mention of the grant of the patent: **18.01.2006**
(21) Application number: 00107270.1
(22) Date of filing: 04.04.2000
(51) Int. Cl.: B29C 51/16, D21J 7/00

(54) **Method and apparatus for producing moulded pulp articles with a plastic film laminated thereon**
Verfahren und Vorrichtung zum Herstellen von aus Fasern bestehenden Gegenständen mit laminierter Kunststoffolie
Procédé et appareil pour la production de corps fibreux laminés avec une feuille de matière plastique

(43) Date of publication of application: 17.10.2001
(73) Proprietor: BRODRENE HARTMANN A/S, DK-2800 Lyngby (DK)
(72) Inventor: Frederiksen, John Hoffmann, 3500 Vaerlose (DK); Rasmussen, Torben, 2765 Smorum (DK)
(74) Representative: Roerboel, Leif

(56) References cited:
- US-A- 3 957 558
- US-A- 4 257 530
- US-A- 4 448 640
- US-A- 4 529 464

## Description

### TECHNICAL FIELD

The present invention relates to an apparatus for producing moulded pulp articles that have a plastic film laminated thereon of the kind set forth in the preamble of claim 1. The invention also relates to a method of producing moulded pulp articles with a plastic film laminated thereon of the kind set forth in claim 15.

### BACKGROUND ART

Moulded pulp articles are a desirable form of packaging since it is an environmental friendly non-expensive alternative to plastic and other materials for three dimensionally contoured packages. The use of such moulded pulp articles as food trays and the like has been desired since several decades. Moulded pulp is however not resistant to moist and as such thus not suitable for holding moist food or beverages. Therefore, several techniques have been developed for coating or laminating the moulded pulp packages with a moist resistant and preferably to provide them with a gas barrier. Other types of moulded pulp articles are packages for industrial products such as mobile phones or print cartridges. Dust and scratching from the pulp material can be problematic for certain sensitive industrial products. There exists therefore also a need for a technique to coat or laminate the moulded pulp articles from this perspective. None of the known techniques for this purpose have been able to meet the requirements for a successful commercial application.

EP-A-0-196 799 discloses an apparatus for laminating plastic film onto moulded pulp articles. Preformed articles are taken from a stack of articles by a destacking apparatus and placed in rows across a conveyor. The articles are fed by the conveyor and lined with a superimposed plastic film at a laminating station where the plastic film is bonded to the interior of the articles. This apparatus for the laminating of films to moulded pulp articles does not operate at desirably high speeds that allow successful commercial application. Further, the off-line mode of operation of the known prior art laminating line creates problems with handling and storing large amounts of articles between the production of the articles and the laminating line.

An apparatus and method for producing moulded pulp articles and laminating a portion of the surface of these products with liquid-impervious layer is furthermore disclosed in US 3,957,558. The apparatus and the method comprises a moulding line and a laminating line, whereby the moulding line comprises a suction moulding station with a pulp vat, a number of suction moulds, and a drying oven, and the laminating line comprises a plastic film supply unit, a heating station and a laminating station. The moulds are carried on an endless belt through all the stations of the apparatus. In this document are also disclosed the method steps of submerging a number of moulds in the pulp vat, drying the moulded pulp articles in the drying oven, supplying a plastic film to the laminating line, heating the plastic film and the moulded pulp articles, and laminating the film onto the moulded pulp article.

### DISCLOSURE OF THE INVENTION

On this background, it is the object of the present invention to provide an apparatus for producing moulded pulp articles of the kind referred to initially that operates at high rates. It is another object of the present invention to provide a method for producing moulded pulp articles that are laminated laminating a plastic film onto moulded pulp articles of the kind referred to initially that allows operation at high rates. These objects are achieved in accordance with claim 1 and is respectively by transporting the moulded pulp articles in line from the moulding section to the laminating section.

According to an embodiment of the invention, the moulding line is adapted to produce a plurality of articles that are mutually interconnected through bridges.

According to another alternative embodiment of the invention, the laminating line comprises a hot press station before the heating station.

### BRIEF DESCRIPTION OF THE DRAWINGS

In the following detailed portion of the present description, the invention will be explained in more detail with reference to the exemplary embodiments shown in the drawings, in which
Figure 1 is a diagrammatical side view of the moulding line,
Figure 2 is a diagrammatical side view of the laminating line according to the invention,
Figure 3 is a layout of the production line according to the invention, and
Figure 4a and 4b are elevated views on a plurality of interconnected moulded pulp articles and on a disconnected moulded pulp article.

### DETAILED DESCRIPTION OF THE INVENTION

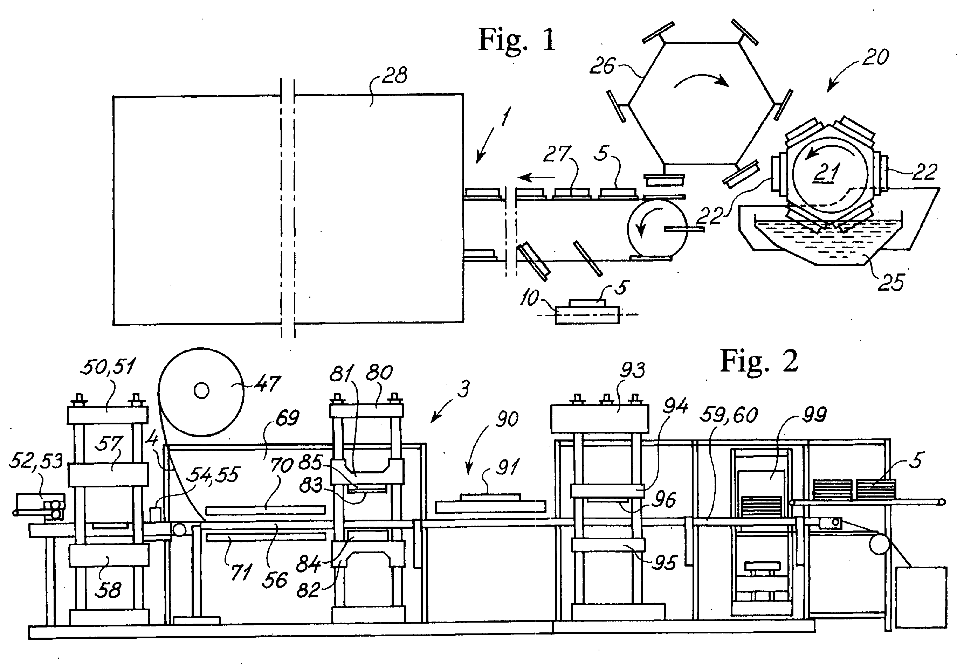

With reference to the figures 1 and 2, a production line for manufacture of moulded pulp articles 5 laminated by welding of plastic film sheets comprises a moulding line 1 and a laminating line 3.

The articles 5 are typically three dimensionally contoured moulded pulp packages such as food- or meat trays. These articles 5 have a relatively thin wall of fibre material such as paper pulp or wood pulp. The articles 5 are intended to be food trays and must therefore be laminated in a clean (hygienic) area.

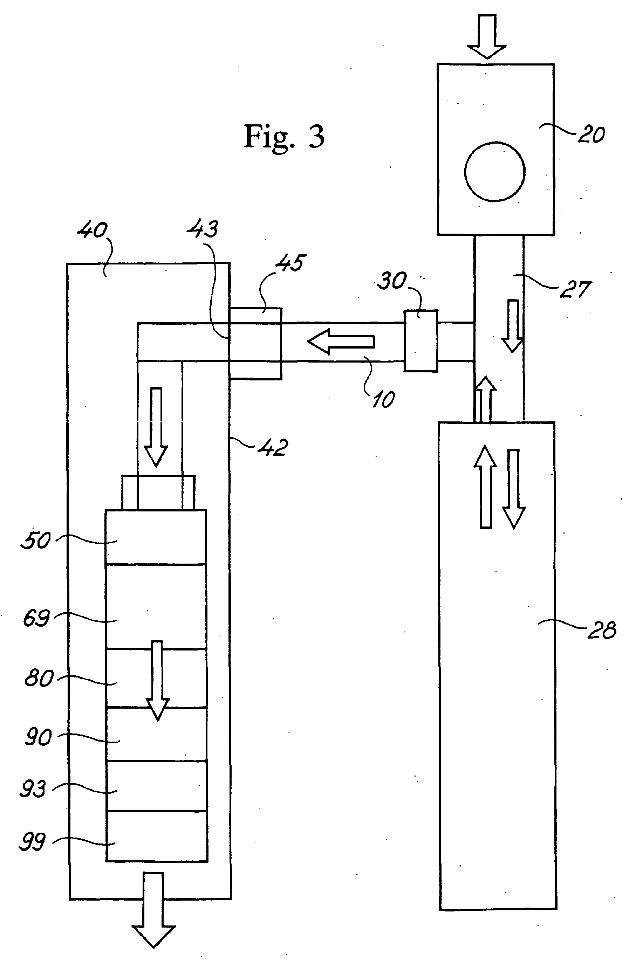

As shown in figure 3, the laminating line 3 is located in a clean room separately from the moulding line 1. The two lines are separated. The laminating line 3 and the moulding line 1 are connected by a conveyor 10 that passes through an air lock into the clean room. The plastic film 4 must be suitable for thermo-forming, preferable gas impermeable or comprise a barrier against certain gases and moisture. Multilayer films 4 with an overall thickness of approximately 50µm provide sufficient thickness after laminating to comply with the barrier standards.

Figure 1 shows diagrammatically a suction moulding line 1 for moulding articles 5 from pulp material. The line starts with a moulding station 20. The moulding station 20 comprises a mould carrier 21, on the outside of which are placed several liquid-permeable suction moulds 22 adapted to be connected with a source of subatmospheric and to a source of super-atmospheric pressure (not shown).

The mould carrier 21 is with a part of its circumferential surface immersed in a pulp vat 25 containing a fibre pulp suspension. This pulp may be made from a fibre-containing raw material, such as waste paper or cardboard. During the immersion in the pulp mass, a layer of fibre material is deposited by suction on the mould surfaces of the suction mould 22. Subsequently, when the suction moulds 22 are withdrawn from the fibre suspension in the pulp vat 25, the suction is continued to compact the deposited fibres while exhausting residual liquid therefrom. After withdrawing the mould from the pulp vat 25, the mould will follow the rotary trajectory of the rotatable mould carrier 21 and thereby suck air through the articles 5 which are thereby partially dewatered, the moulds 2 are further rotated to the position where the articles 5 are blown off from the suction moulds 22 and aspirated onto transfer moulds on the transfer rotor 26. After a part of a revolution of the transfer rotor 26, the articles 5 are blown off therefrom onto a carrier system 27 which transports the articles 5 to a drying oven 28 for a drying procedure. In the drying oven 28, the articles 5 reach their final dry matter weight content of at least 90 weight per cent.

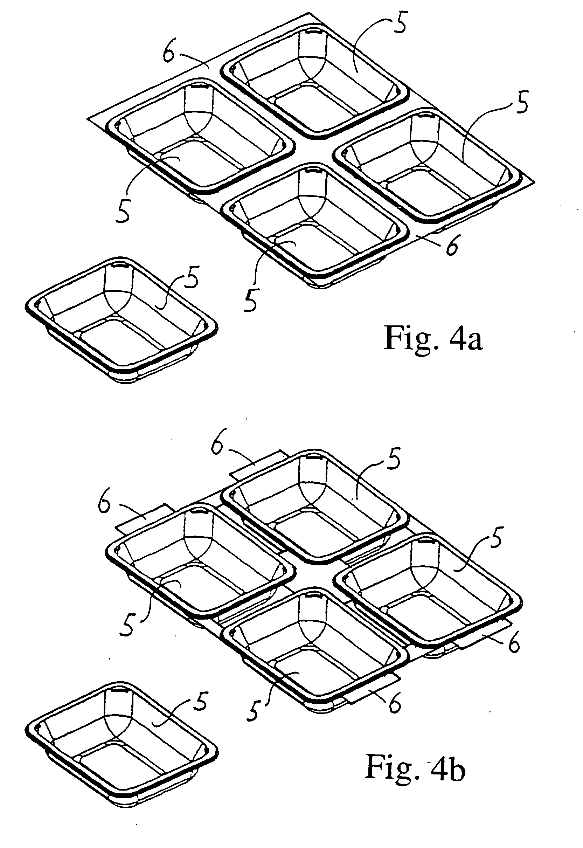

A group of articles 5 may be moulded in the form of a common continuous body with bridges interconnecting the articles 5, said bridges for the sake of simplicity being shown in the form of a common bridge sheet in the drawing (cf. Figure 4a). Instead of a common plate, the bridge connection may also be formed by ribs (cf. Figure 4b), and the bridge connection may also comprise a directly abutting connection between the mutually facing sides of two adjacent articles 5. The articles 5 are provided with lateral tabs or flanges 6 for engagement or gripping by transport means.

From the drying oven 28, a conveyor 10 transports the moulded pulp articles 5 through a humidification station 30 to the laminating line 3. The conveyor 10 comprises a buffer of articles 5 between the moulding line 1 and the laminating line 3 in order to avoid gaps in the supply of moulded pulp articles 5 to the laminating line 3. The operation speed of the laminating line 3 depends on the number of articles 5 in the buffer, i.e. less articles 5 in the buffer, the lower result in a low operation speed.

The articles 5 leaving the drying oven 28 are too dry for a hot press operation. Therefore, a controlled humidification takes place in the humidification station 30 to obtain a smooth surface of the product with exact dimensions after the hot pressing in the heated tools which create a steam pressure.

The laminating line 3 is arranged in a clean room 40 that is separated from the moulding line 1 and the humidification station 30 in order to avoid contamination. In the clean room 40, an overpressure is maintained in order to avoid unclean air coming in. A wall 42 separating the clean room 40 from the moulding line environment is provided with an opening 43 with a tunnel 45 extending therefrom into the moulding line environment. The tunnel 45 increases the flow restriction for the air flowing out through the opening thereby reducing the amount of lost pressurised air.

The laminating line 3 comprises a hot press station 50, a heating station 69, a laminating station 80, a crystallisation station 90, a cutting station 93, a stacking station 99 and a conveying apparatus 56 which serves to guide and transport the moulded articles 5 and the plastic film 4 through the stations.

At the start of the laminating line 3, the moulded pulp articles 5 or the plurality of moulded pulp articles 5 are positioned in the hot press station 50 by means of two transversely spaced sets of actuators 52,53 receiving a closed loop control signal from two transversely.spaced photo cells 54,55 in order to position the front edge of the article or plurality of articles 5 exactly perpendicular to transport direction.

The hot press 51 comprises an upper 57 and a lower 58 tool complementary shaped in accordance with the article 5 to be laminated. The upper tool 57 and the lower tool 58 both move towards the article 5 when the hot press 51 is closed. Both tools 57,58 are heated by conventional means. The hot press action heats the moulded pulp article 5 extremely fast to a temperature of about 50 to 100 degrees Celsius. When the hot press 51 is closed, the lateral tabs or flanges 6 on the articles 5 or plurality of interconnected articles 5 extend out of the tools 57,58 so that they can be engaged by the conveyor apparatus 56.

A conventional conveying apparatus 56 comprises two transversely spaced rails 59 extending along the longitudinal axis of the laminating line 3. The distance between the rails 59 can be adjusted in accordance with the width of the articles 5 or the width of the plurality of interconnected articles 5. Each rail 59 defines two channels, an upper and a lower channel in which a spiked chain is guided (not shown). In the upper channel, the spiked chain moves forward through the laminating line 3 while in the lower channel the spiked chain returns to the start of the laminating line 3. The upper channel also defines a surface for guiding the tabs or flanges 6 of the articles 5 and is provided with a groove in which the spikes partially extend. Thus, the spikes extend through the tabs or flanges 6 and positively engage the flanges or tabs 6. The spikes penetrate the tabs or flanges 6 when the article 5 or the plurality of interconnected articles 5 is positively fixed in the closed hot press 51. When the hot press 51 opens, the chain is driven to transport the articles 5 to the next station.

Alternatively clamps, belts or other fixating means (not shown) can substitute the spiked chain.

Directly after the hot press station 50, the plastic film 4 is fed from a film reel 47 into the rails 59 through a slot in the guiding surface of the upper channels. The spikes of the chain also penetrate the plastic film 4 and the plastic film 4 and the articles 5 are moved in unison by the spiked chain to the heating station 69.

The heating station 69 comprises a heating element above 70 and one under 71 the moulded pulp articles 5 and the plastic film 4. The plastic film 4 only absorbs a part of the radiation from the upper heating element 70 and the rest can be absorbed by the moulded pulp articles 5. The plastic film 4 is heated to above the glass temperature and the moulded pulp articles 5 have a temperature less than 200 degrees Celsius when they leave the heating station 69.

The next station is a conventional laminating 80 station which comprises an upper 81 and a lower table 82. The upper table 81 is provided with die press tool 83 whereas the lower table 82 is provided with a heated suction mould 84. Both the upper and lower table move towards the film 4 and the moulded pulp article 5. A partial vacuum is applied to the suction mould 84. The film 4 is bonded to the moulded pulp articles 5 by being drawn downwardly by the partial vacuum applied to the suction mould 84 through the moulded pulp article 5 and/or by the press tool 83. The upper table 81 may also be provided with means (not shown) to apply compressed air to the upper side of the plastic sheet 4.

Further, the laminating station 80 comprises a separately movable hot tool 85 for laminating the plastic film 4 to selected (flange) areas of the moulded pulp articles 5 in order to positively weld the film 4 to these areas of the moulded pulp articles 5.

The articles 5 with the film 4 laminated thereon are then transported by the conveyor 56 to the crystallisation station 90. This station comprises an upper heating element 91. By exposing the plastic film 4 to the heat, a crystallisation from amorphous to crystalline can take place if desired. In the case of food trays, this renders the laminated moulded pulp article 5 resistant to the heat of a domestic oven.

Next, a conventional cutting station 93 comprising an upper 94 and a lower movable tool 95 for die cutting separates the plurality of interconnected articles 5 and for removing superfluous flange material such as the tabs or flanges 6 for gripping by the conveyor 56. Either the upper or the lower tool is provided with a knife 96 to cut of the flange areas. The articles 5 remain connected to the "waste" material by narrow bridges in order to allow further transport to a stacking station 99.

After the cutting station 93, a conventional stacking station 99 stacks the laminated moulded pulp articles 5 so that they may be removed batch-wise from the laminating line 3.

According to a not shown embodiment, a filling and sealing line is arranged in line/off line with the laminating line for filling the trays with food or other products and then sealing the filled tray with a plastic top sheet. Thus, the laminating line does not comprise a stacking station.

### LIST OF REFERENCE NUMERALS

- 1: moulding line
- 3: laminating line
- 4: plastic film
- 5: article
- 6: tab or flange
- 10: conveyor
- 20: moulding station
- 21: mould carrier
- 22: suction mould
- 25: pulp vat
- 26: transfer
- 27: carrier system.
- 28: drying oven
- 30: humidification station
- 40: clean room
- 42: wall
- 43: opening
- 45: tunnel
- 47: film reel
- 50: hot press station
- 51: hot press
- 52: actuator
- 53: actuator
- 54: photocell
- 55: photocell
- 56: conveyor
- 57: upper tool
- 58: lower tool
- 59: rail
- 69: heating station
- 70: upper heating element
- 71: lower heating element
- 80: laminating station
- 81: upper table
- 82: lower table
- 83: press tool
- 84: suction mould
- 85: hot tool
- 90: crystallisation station
- 91: upper heating element
- 93: cutting station
- 94: upper tool
- 95: lower tool
- 96: knife
- 99: stacking station

## Claims

1. Apparatus for producing articles (5) from moulded pulp material that are laminated with a plastic film (4) comprising a moulding line (1) and a laminating line (3), the moulding tine (1) comprises a suction moulding station (20) with a pulp vat (25) and a number of suction moulds (22), a drying oven (28) and conveying means (26,27) for transporting the moulded pulp articles (5) through the moulding line (1), the apparatus further comprising conveying means (10) for transporting the moulded pulp articles (5) from the moulding line (1) to the laminating line (3), whereby the laminating line (3) comprises a plastic film supply unit (47), a heating station (69), a laminating station (80), and conveying means (56) for conveying the articles (5) through the laminating line (3) **characterised in that**, when the apparatus is in operation, said articles are separated from the moulds (22) prior to the drying oven (28) and subsequent transportation to the laminating line (3), and that said laminating line (3) is located separately from the moulding line (1) in a clean room (40) forming one continuous production line with the laminating line (3) arranged in line with the moulding line (1), and the laminating line further comprises a crystallisation station.

2. Apparatus according to claim 1, wherein the moulding line (1) is adapted to produce a plurality of articles (5) that are mutually interconnected.

3. Apparatus according to claim 2, wherein the plurality of interconnected articles (5) are transported together through the moulding line (1) and the laminating line (3).

4. Apparatus according to claim 1, **characterised in that** the conveying means (10) for transporting the moulded pulp articles (5) from the moulding line (1) to the laminating line (3) passes through an opening (43) in a wall (42) separating the laminating line (3) from the moulding line (1), whereby a tunnel (45) is extending from the opening (43) towards the moulding line (1) in which tunnel the conveying means (10) is received.

5. Apparatus according to any of claims 1 to 4, wherein the laminating line (1) further comprises a hot press station (50) and a corresponding humidification station (30) before the heating station (69).

6. Apparatus according to any of claims 1 to 5, wherein the conveying means (10) for transporting the moulded pulp articles (5) from the moulding line (1) to the laminating line (3) comprises a buffer of moulded pulp articles (5).

7. Apparatus according to claim 5, further comprising a means (52,53,54,55) for positioning the moulded pulp articles (5) with respect to the hot press station (50).

8. Apparatus according to claim 7, wherein the moulded pulp articles (5) are fixed with respect to the conveying means (56) for transporting the articles (5) through the laminating line (3) when the hot press (51) is closed.

9. Apparatus according to any of claims 1 to 8, wherein the laminating station (3) further comprises a hot tool (85) for laminating the plastic film (4) to selected areas of the moulded pulp articles (5) in order to weld the film (4) in these areas to the moulded pulp articles (5).

10. Apparatus according to any of claims 1 to 9, wherein the laminating station (3) comprises means for applying underpressure to the film (4) through the moulded pulp articles (5) and/or a pressing tool (83) and/or means for applying overpressure to the film (4) in order to shape the plastic film (4) and press it onto the moulded pulp articles (5) and secure sufficient bonding of the film (4) to the articles (5).

11. Apparatus according to any of claims 1 to 10, wherein the moulded pulp articles (5) or a plurality of interconnected moulded pulp articles (5) are moulded with laterally protruding tabs or flanges (6) which are gripped or engaged by the conveying means.

12. Apparatus according to claim 11, wherein the conveying means (56) for transporting the articles (5) through the laminating line (3) engage both the tabs or flanges (6) of moulded articles (5) or of the plurality of interconnected moulded pulp articles (5) and the plastic film (4) sheet with a common engagement means.

13. Apparatus according to any of claims 6 to 12 in which the operation speed of the laminating line (3) depends on the number of moulded pulp articles (5) in the buffer.

14. Apparatus according to any of claims 1 to 13, further comprising a film crystallisation station (90) after the laminating station (80).

15. Method of producing moulded pulp articles (5) with a plastic film (4) laminated thereon comprising the steps of,
providing a pulp vat (25),
providing a number of suction moulds (22),
submerging a number of moulds (22) in the pulp vat (25),
removing the moulded pulp articles (5) from the suction mould (22) and conveying the moulded pulp articles (5) through a drying oven (28) to dry them,
transporting the moulded pulp articles (5) in line from the drying oven (28) to a laminating line (3), which laminating line (3) is located separately from the moulding line (1) in a clean room (40),
supplying plastic film (4) to the laminating line (3),
heating the plastic film (4) and the moulded pulp articles (5),
laminating the film (4) onto the moulded article (5) and crystallising the plastic film (4), and conveying the articles (5) through the laminating line.

16. Method according to claim 15, wherein a plurality of articles (5) mutually interconnected through bridges are moulded together as an integral body which is conveyed as one entity through the moulding line (1) and the laminating line (3).

17. Method according to claim 16, wherein the moulded pulp articles (5) or a plurality of interconnected moulded pulp articles (5) are moulded with laterally protruding tabs or flanges (6) which are gripped or engaged by the conveying means (10).

## Patentansprüche

1. Vorrichtung zum Herstellen von Gegenständen (5) aus geformtem Pulpematerial, welche mit einem Kunststofffilm (4) laminiert sind, mit einer Formlinie (1) und einer Laminierlinie (3), wobei die Formlinie (1) eine Saugformstation (20) mit einer Pulpebütte (25) und einer Anzahl von Saugformen (22), einen Trockenofen (28) und Fördermittel (26,27) zum Transportieren der geformten Pulpegegenstände (5) durch die Formlinie (1) aufweist, wobei die Vorrichtung weiterhin Fördermittel (10) zum Transportieren der geformten Pulpegegenstände (5) von der Formlinie (1) zu der Laminierlinie (3) aufweist, wobei die Laminierlinie (3) eine Kunststofffilmversorgungseinheit (47), eine Heizstation (69), eine Laminierstation (80) und Fördermittel (56) zum Fördern der Gegenstände (5) durch die Laminierlinie (3) aufweist, **dadurch gekennzeichnet, dass**, wenn die Vorrichtung in Betrieb ist, die genannten Gegenstände vor dem Trockenofen (28) und nach dem Transport zu der Laminierlinie (3) von den Formen (22) getrennt sind, und dass die genannte Laminierlinie (3) getrennt von der Formlinie (1) in einem Reinraum (40) platziert ist, welcher eine kontinuierliche Produktionslinie mit der Laminierlinie (3) bildet, welche in Linie mit der Formlinie (1) und der Laminierlinie angeordnet ist, sowie eine Kristallisationsstation enthält.

2. Vorrichtung nach Anspruch 1, bei welcher die Formlinie (1) dazu angepasst ist, eine Vielzahl von Gegenständen (5) zu erzeugen, welche miteinander verbindbar sind.

3. Vorrichtung nach Anspruch 2, bei welcher die Vielzahl der miteinander verbundenen Gegenstände (5) gemeinsam durch die Formlinie (1) und die Laminierlinie (3) transportiert wird.

4. Vorrichtung nach Anspruch 1, **dadurch gekennzeichnet, dass** die Fördermittel (10) zum Transportieren der geformten Pulpegegenstände (5) von der Formlinie (1) zu der Laminierlinie (3) durch eine Öffnung (43) in einer Wand (42) führt, welche die Laminierlinie (3) von der Formlinie (1) abteilt, wobei ein Tunnel (45) sich von der Öffnung (43) in Richtung der Formlinie (1) erstreckt, in welchem Tunnel die Fördermittel (10) aufgenommen sind.

5. Vorrichtung nach einem der Ansprüche 1 bis 4, bei welcher die Laminierlinie (1) weiterhin eine Heißpressstation (50) und eine entsprechende Befeuchtungsstation (30) vor der Heizstation (69) aufweist.

6. Vorrichtung nach einem der Ansprüche 1 bis 5, bei welcher die Fördermittel (10) zum Transportieren der geformten Pulpegegenstände (5) von der Formlinie (1) zu der Laminierlinie (3) einen Puffer von geformten Pulpegegenständen (5) aufweist.

7. Vorrichtung nach Anspruch 5, weiterhin enthaltend eine Vorrichtung (52,53,54,55) zum Positionieren der geformten Pulpegegenstände (5) relativ zu der Heißpressstation (50).

8. Vorrichtung nach Anspruch 7, bei welcher die geformten Pulpegegenstände (5) bezüglich der Fördermittel (56) zum Transportieren der Artikel (5) durch die Laminierlinie (3) fixiert sind, wenn die Heißpresse (51) geschlossen ist.

9. Vorrichtung nach einem der Ansprüche 1 bis 8, bei welcher die Laminierstation (3) weiterhin ein Heißwerkzeug (65) zum Laminieren des Kunststofffilmes (4) auf ausgewählte Bereiche der geformten Pulpegegenstände (5) aufweist, um den Film (4) in diesen Bereichen an die geformten Pulpegegenstände (5) anzuschweißen.

10. Vorrichtung nach einem der Ansprüche 1 bis 9, bei welcher die Laminierstation (3) Mittel zum Anlegen eines Unterdrucks auf den Film (4) durch die geformten Pulpegegenstände (5) und/oder ein Presswerkzeug (83) und/oder Mittel zum Anlegen eines Überdruckes auf den Film (4) aufweist, um den Kunststofffilm (4) zu gestalten und ihn an die geformten Pulpegegenstände (5) zu drücken und eine ausreichende Verbindung des Films (4) mit den Gegenständen (5) zu sichern.

11. Vorrichtung nach einem der Ansprüche 1 bis 10, bei welcher die geformten Pulpegegenständen (5) oder eine Vielzahl von miteinander verbundenen geformten Pulpegegenständen (5) mit seitlich vorstehenden Zungen oder Flanschen (6) geformt sind, welche von den Fördermitteln ergriffen oder angegriffen werden.

12. Vorrichtung nach Anspruch 11, bei welcher die Fördermittel (56) zum Transportieren der Gegenstände (5) durch die Laminierlinie (3) die beiden Zungen oder Flansche (6) der geformten Gegenstände (5) oder der Vielzahl von miteinander verbundenen geformten Pulpegegenstände (5) und das Blatt Kunststofffilm (4) mit einer gemeinsamen Angriffseinrichtung ergreifen.

13. Vorrichtung nach einem der Ansprüche 6 bis 12, bei welcher die Betriebsgeschwindigkeit der Laminierlinie (3) von der Anzahl der geformten Pulpegegenstände (5) in dem Puffer abhängt.

14. Vorrichtung nach einem der Ansprüche 1 bis 13, weiterhin enthaltend eine Filmkristallisationsstation (90) nach der Laminierstation (80).

15. Verfahren zum Herstellen geformter Pulpegegenstände (5) mit einem darauf laminierten Kunststofffilm (4), enthaltend die Schritte,
Bereitstellen einer Pulpebütte (25),
Bereitstellen einer Anzahl von Saugformen (22),
Eintauchen einer Anzahl von Formen (22) in die Pulpebütte (25),
Entfernen der geformten Pulpegegenstände (5) von der Saugform (22) und Fördern der geformten Pulpegegenstände (5) durch einen Trockenofen (28), um sie zu trocknen,
Transportieren der geformten Pulpegegenstände (5) in Linie von dem Trockenofen (28) zu einer Laminierlinie (3), welche Laminierlinie (3) getrennt von der Formlinie (1) in einem Reinraum (40) platziert ist,
Zuführen von Kunststofffilm (4) zu der Laminierlinie (3),
Erhitzen des Kunststofffilms (4) und der geformten Pulpegegenstände (5),
Laminieren des Films (4) auf den geformten Gegenstand (5) und Kristallisieren des Kunststofffilms (4),
und Fördern der Gegenstände (5) durch die Laminierlinie.

16. Verfahren nach Anspruch 15, bei welchem eine Vielzahl von Gegenständen (5) miteinander über Brücken als ein integraler Körper zusammengeformt sind, welcher als eine Einheit durch die Formlinie (1) und die Laminierlinie (3) gefördert wird.

17. Verfahren nach Anspruch 16, bei welchem die geformten Pulpegegenstände (5) oder eine Vielzahl von miteinander verbundenen geformten Pulpegegenständen (5) mit seitlich vorspringenden Zungen oder Flanschen (6) geformt werden, welche von den Fördermitteln (10) ergriffen oder angegriffen werden.

## Revendications

1. Appareil permettant de produire des articles (5) à partir de matériau de pâte à papier moulée, qui sont pelliculés avec un film plastique (4), comprenant une chaîne de moulage (1) et une chaîne de pelliculage (3), la chaîne de moulage (1) comprenant un poste de moulage par aspiration (20) équipé d'un bac à pâte à papier (25) et de plusieurs moules aspirants (22), un four de séchage (28) et des moyens de convoyage (26, 27) permettant de transporter les articles en pâte à papier moulée (5) à travers la chaîne de moulage (1), l'appareil comprenant en outre un moyen de convoyage (10) permettant de transporter les articles en pâte à papier moulée (5) depuis la chaîne de moulage (1) jusqu'à la chaîne de pelliculage (3), la chaîne de pelliculage (3) comprenant une unité d'alimentation en film plastique (47), un poste de chauffage (69), un poste de pelliculage (80) et un moyen de convoyage (56) permettant de convoyer les articles (5) à travers la chaîne de pelliculage (3), **caractérisé en ce que**, lorsque l'appareil est en marche, lesdits articles sont séparés des moules (22) avant le four de séchage (28) et le transport subséquent vers la chaîne de pelliculage (3), et **en ce que** ladite chaîne de pelliculage (3) est située séparément de la chaîne de moulage (1) dans une salle blanche (40) formant une chaîne de production continue avec la chaîne de pelliculage (3) agencée à la chaîne avec la chaîne de moulage (1), et la chaîne de pelliculage comprenant en outre un poste de cristallisation.

2. Appareil selon la revendication 1, dans lequel la chaîne de moulage (1) est conçue pour produire une pluralité d'articles (5) qui sont mutuellement raccordés entre eux.

3. Appareil selon la revendication 2, dans lequel la pluralité d'articles (5) raccordés entre eux est transportée à travers la chaîne de moulage (1) et la chaîne de pelliculage (3).

4. Appareil selon la revendication 1, **caractérisé en ce que** le moyen de convoyage (10) permettant de transporter les articles en pâte à papier moulée (5) de la chaîne de moulage (1) jusqu'à la chaîne de pelliculage (3) passe à travers une ouverture (43) dans une paroi (42) séparant la chaîne de pelliculage (3) de la chaîne de moulage (1), un tunnel (45) s'étendant de l'ouverture (43) en direction de la chaîne de moulage (1), dans lequel tunnel le moyen de convoyage (10) est reçu.

5. Appareil selon l'une quelconque des revendications 1 à 4, dans lequel la chaîne de pelliculage (1) comprend en outre un poste de pressage à chaud (50) et un poste d'humidification (30) correspondant avant le poste de chauffage (69).

6. Appareil selon l'une quelconque des revendications 1 à 5, dans lequel le moyen de convoyage (10) permettant de transporter les articles en pâte à papier moulée (5) depuis la chaîne de moulage (1) jusqu'à la chaîne de pelliculage (3) comprend un tampon d'articles en pâte à papier moulée (5).

7. Appareil selon la revendication 5, comprenant en outre un moyen (52, 53, 54, 55) permettant de positionner les articles en pâte à papier moulée (5) par rapport au poste de pressage à chaud (50).

8. Appareil selon la revendication 7, dans lequel les articles en pâte à papier moulée (5) sont fixés par rapport au moyen de convoyage (56) permettant de transporter les articles (5) à travers la chaîne de pelliculage (3) lorsque la presse à chaud (51) est fermée.

9. Appareil selon l'une quelconque des revendications 1 à 8, dans lequel le poste de pelliculage (3) comprend en outre un outil chauffant (85) permettant de pelliculer le film plastique (4) sur des zones choisies des articles en pâte à papier moulée (5) de manière à souder le film (4) dans ces zones sur les articles en pâte à papier moulée (5).

10. Appareil selon l'une quelconque des revendications 1 à 9, dans lequel le poste de pelliculage (3) comprend un moyen d'application sous pression du film (4) sur les articles en pâte à papier moulée (5) et/ou un outil de pression (83) et/ou un moyen d'application en surpression du film (4) de manière à donner une forme au film plastique (4) et le presser sur les articles en pâte à papier moulée (5) et assurer un collage suffisant du film (4) sur les articles (5).

11. Appareil selon l'une quelconque des revendications 1 à 10, dans lequel les articles en pâte à papier moulée (5) ou la pluralité d'articles en pâte à papier moulée (5) raccordés entre eux sont moulés avec des languettes ou rebords (6) ressortant latéralement qui sont saisis ou engagés par le moyen de convoyage.

12. Appareil selon la revendication 11, dans lequel le moyen de convoyage (56) permettant de transporter les articles (5) à travers la chaîne de pelliculage (3) s'engage à la fois sur les languettes ou rebords (6) des articles moulés (5) ou de la pluralité d'articles en pâte à papier moulée (5) et sur la feuille de film plastique (4) avec un moyen d'engagement commun.

13. Appareil selon l'une quelconque des revendications 6 à 12, dans lequel la vitesse de fonctionnement de la chaîne de pelliculage (3) dépend du nombre d'articles en pâte à papier moulée (5) dans le tampon.

14. Appareil selon l'une quelconque des revendications 1 à 13, comprenant en outre un poste de cristallisation de film (90) après le poste de pelliculage (80).

15. Procédé de production d'articles en pâte à papier moulée (5) avec un film plastique (4) pelliculé sur ceux-ci, comprenant les étapes consistant à :
fournir un bac à pâte (25),
fournir plusieurs moules aspirants (22),
immerger plusieurs moules (22) dans le bac à pâte à papier (25),
enlever les articles en pâte à papier moulée (5) des moules aspirants (22) et convoyer les articles en pâte à papier moulée (5) à travers un four de séchage (28) pour les sécher,
transporter les articles en pâte à papier moulée (5) à la chaîne à partir du four de séchage (28) jusqu'à une chaîne de pelliculage (3), laquelle chaîne de pelliculage (3) est située séparément de la chaîne de moulage (1) dans une salle blanche (40),
alimenter la chaîne de pelliculage (3) en film plastique (4),
chauffer le film plastique (4) et les articles en pâte à papier moulée (5),
pelliculer le film (4) sur les articles moulés (5) et cristalliser le film plastique (4),
et convoyer les articles (5) à travers la chaîne de pelliculage.

16. Procédé selon la revendication 15, dans lequel une pluralité d'articles (5) raccordés mutuellement entre eux par des ponts sont moulés ensemble d'un seul tenant qui est convoyé comme une seule entité à travers la chaîne de moulage (1) et la chaîne de pelliculage (3).

17. Procédé selon la revendication 16, dans lequel les articles en pâte à papier moulée (5) ou une pluralité d'articles en pâte à papier moulée (5) raccordés entre eux sont moulés avec des languettes ou rebords (6) ressortant latéralement qui sont saisi(e)s ou engagé(e)s par le moyen de convoyage (10).
